# EUROPÄISCHE PATENTSCHRIFT

(11) **EP 3 428 368 B1**
(45) Veröffentlichungstag und Bekanntmachung des Hinweises auf die Patenterteilung: **15.04.2020**
(21) Anmeldenummer: 18178845.6
(22) Anmeldetag: 20.06.2018
(51) Int. Cl.: E04G 21/30, E04G 21/24, F16B 2/04

(54) **KLEMMVORRICHTUNG FÜR EINE MOBILE STAUBWAND**
CLAMPING DEVICE FOR A MOBILE DUST WALL
SYSTÈME DE SERRAGE POUR UNE PAROI ANTI-POUSSIÈRE MOBILE

(30) Priorität: 11.07.2017 DE 202017104132 U
(43) Veröffentlichungstag der Anmeldung: 16.01.2019
(73) Patentinhaber: HEYLO GmbH, 28832 Achim (DE)
(72) Erfinder: WITTLEDER, Thomas, 28832 Achim (DE)
(74) Vertreter: RGTH

(56) Entgegenhaltungen:
- WO-A1-2017/007874
- CA-A- 1 138 385
- US-A- 3 822 850
- US-A1- 2004 031 892

## Beschreibung

Die Erfindung betrifft eine Klemmvorrichtung zum Fixieren einer Klemmschiene zwischen einer Wandfläche oder einer Deckenfläche und einer parallel zu der Wandfläche oder der Deckenfläche angeordneten Stange sowie eine Staubschutzwand umfassend eine solche Klemmvorrichtung.

### Stand der Technik

Mobile Staubschutzwände kommen dort zum Einsatz, wo Bereiche eines Raumes beispielsweise zur Durchführung von Maler-, Stemm- oder Schleifarbeiten von dem Staub oder Schmutz benachbarter Arbeiten geschützt werden sollen. Derartige Systeme sollen vorzugsweise schnell aufbaubar sein und darüber hinaus an möglichst viele Gegebenheiten anpassbar sein. Ferner ist es wichtig, dass das Wandsystem installiert werden kann, ohne dazu Veränderungen an Wänden oder an der Decke vornehmen zu müssen.

Ein derartiges System ist beispielsweise aus der WO 2017/007874 bekannt. Mit dem dort beschriebenen System kann eine Lücke zwischen einem Vorhang und einer benachbarten Wand, einem Fenster oder einer anderen Fläche, ausgeglichen werden, wobei das System eine Klemme umfasst, welche zwischen einer aufgestellten Stange und der benachbarten Wand, dem Fenster oder der anderen Fläche angeordnet werden kann. Die WO 2017/007874 offenbart die Merkmale des einleitenden Teils des Anspruchs 1.

Weiterhin ist aus der US 3,822,850 A eine Stütze für einen Konstruktionszaun bekannt aufweisend zwei Pfosten, welche teleskopisch miteinander verbunden sind.

Ferner ist aus der CA 1 138 385 A eine Stützstange zum Einsatz zwischen einer Wand und einer Schiene bekannt aufweisend eine äußere rohrförmige Stange und eine innere Stange, welche teleskopisch in der äußeren Stange aufgenommen ist.

### Darstellung der Erfindung: Aufgabe, Lösung, Vorteile

Der Erfindung liegt die Aufgabe zugrunde, eine Klemmvorrichtung zum Fixieren einer Klemmschiene einer Staubschutzwand zwischen einer Wandfläche oder einer Deckenfläche und einer parallel zu der Wandfläche oder der Deckenfläche angeordneten Stange der Staubschutzwand bereitzustellen, welche ein schnelles und flexibles Installieren der Staubschutzwand ermöglicht, ohne die Wandfläche oder die Deckenfläche modifizieren oder beschädigen zu müssen. Diese Aufgabe wird durch die in Anspruch 1 angegebenen Merkmale gelöst.

Die Erfindung sieht eine Klemmvorrichtung zum Fixieren einer Klemmschiene zwischen einer Wandfläche oder einer Deckenfläche und einer parallel zu der Wandfläche oder der Deckenfläche angeordneten Stange vor, welche ein Verbindungsteil aufweist, das zur Befestigung der Klemmvorrichtung mit der Klemmschiene ausgebildet ist. Darüber hinaus weist die Klemmvorrichtung mindestens eine erste Aufnahmevorrichtung auf, welche zur Aufnahme der Stange dient.

Das Verbindungsteil weist eine Verbindungshülse auf, welche zwischen der Klemmschiene und der Stange anordnenbar ist. Innerhalb der Verbindungshülse ist axial ein Spannelement angeordnet, welches zur Beaufschlagung einer Spannung auf die erste Aufnahmevorrichtung gegenüber dem Verbindungsteil dient.

Durch die Anordnung des Spannelements innerhalb der Verbindungshülse ist dieses vorteilhaft vor äußeren Einwirkungen geschützt. Darüber hinaus besteht nicht die Gefahr, dass sich ein Benutzer der Klemmvorrichtung für den Fall, dass das Spannelement beispielsweise als Feder ausgeführt ist, an dieser klemmt.

Zur Installation der Klemmvorrichtung im Staubschutzwandsystem wird diese zunächst an der Klemmschiene befestigt. Die Klemmschiene und die Klemmvorrichtung werden nun zwischen die bereits zwischen einer zweiten Wandfläche und einer dritten Wandfläche aufgestellten Stange eingeklemmt, indem zunächst die Folie zwischen der Klemmschiene und der ersten Wandfläche angeordnet und die Klemmschiene anschließend gegen die erste Wandfläche gedrückt wird, um die Folie an der ersten Wandfläche zu fixieren.

Mittels des Spannelements wird nun die erste Aufnahmevorrichtung mit einer Spannung beaufschlagt, wodurch die Klemmvorrichtung in ihrer Längserstreckung verkürzt wird, sodass sie in die Lücke zwischen der ersten Wandfläche und der Stange einbringbar ist. Anschließend wird die Stange derart im Bereich der ersten Aufnahmevorrichtung angeordnet, dass nach Reduzierung der Spannung des Spannelements die Klemmvorrichtung fest zwischen der Stange und der ersten Wandfläche eingeklemmt ist.

Erfindungsgemäß ist vorgesehen, dass das Verbindungsteil eine Stützvorrichtung aufweist, mittels welcher die Klemmvorrichtung in einer Richtung senkrecht zu einer Längsachse der Verbindungshülse abgestützt werden kann. Mittels dieser Stützvorrichtung kann die Klemmvorrichtung an einem Punkt an der Wand, welcher beabstandet zum Befestigungspunkt zwischen Klemmschiene und Klemmvorrichtung angeordnet ist, abgestützt werden.

Erfindungsgemäß ist vorgesehen, dass zur Befestigung der Klemmvorrichtung mit der Klemmschiene das Verbindungsteil wenigstens einen Vorsprung aufweist, welcher zum Eingriff in ein Profil der Klemmschiene ausgebildet ist, sodass das Verbindungsteil an die Klemmschiene geklemmt werden kann.

Erfindungsgemäß ist vorgesehen, dass das Verbindungsteil einstückig ausgeführt ist, umfassend die Verbindungshülse, die Stützvorrichtung und den wenigstens einen Vorsprung. Dadurch reduziert sich die Anzahl der Einzelbauteile, was sich insbesondere vorteilhaft auf die Montage der Klemmvorrichtung auswirkt.

Vorteilhafte Ausgestaltungen der Erfindung sind in den Unteransprüchen gekennzeichnet.

Der Befestigungspunkt der Klemmvorrichtung mit der Klemmschiene, die Verbindungshülse, das Spannelement und die erste Aufnahmevorrichtung sind vorzugsweise entlang einer Linie angeordnet, welche einer Längsachse der Verbindungshülse entspricht. Dabei ist das Verbindungsteil zwischen der Klemmschiene und der Aufnahmevorrichtung angeordnet. Im installierten Zustand der Klemmvorrichtung verläuft die Längsachse der Verbindungshülse parallel zur Lotgeraden zwischen einem zentralen Auflagepunkt der Stange an der Klemmvorrichtung und der ersten Wandfläche.

Gemäß einer zweckmäßigen Ausgestaltung ist an der ersten Aufnahmevorrichtung eine Hülse angeordnet und fest mit dieser verbunden, wobei sich die Hülse teilweise in die Verbindungshülse hinein erstreckt und darin geführt wird. An der Hülse ist hierfür ein Führungselement angeordnet, welches innerhalb einer an der Verbindungshülse angebrachten Führungsnut geführt werden kann. Die Führungsnut ist an beiden Enden geschlossen ausgeführt, sodass mittels des Führungselementes und der Führungsnut die Hülse innerhalb der Verbindungshülse gehalten wird und ein Verdrehen der Verbindungshülse gegen die Hülse verhindert wird.

Mittels der Klemmvorrichtung ist es möglich, eine Folie einer Staubschutzwand zwischen der Wandfläche oder der Deckenfläche und der Klemmschiene einzuklemmen und dadurch zu fixieren. Die Stange ist dabei vorzugsweise zwischen einer zweiten Wandfläche, beispielsweise einer Bodenfläche, und einer dritten Wandfläche, beispielsweise einer Deckenfläche, angeordnet und klemmt eine Folie zwischen den beiden Enden der Stange und diesen beiden Wandflächen ein. Dies kann beispielsweise mittels eines Teleskopmechanismus erfolgen.

Gemäß einer vorteilhaften Ausgestaltung ist das Spannelement eine Feder.

Gemäß einer weiteren zweckmäßigen Ausgestaltung ist vorgesehen, dass die Klemmvorrichtung eine zweite Aufnahmevorrichtung zur Aufnahme der Stange aufweist, welche entlang einer Längsachse der Verbindungshülse um einen festen Abstand versetzt zur ersten Aufnahmevorrichtung angeordnet ist.

Durch die Vorsehung einer zweiten Aufnahmevorrichtung, welche alternativ zur ersten Aufnahmevorrichtung zur Aufnahme der Stange nutzbar ist, ist ein flexiblerer Einsatz der Klemmvorrichtung möglich, da sie für unterschiedliche Abstände zwischen der Stange und der Wand einsetzbar ist. Dabei weist entweder die erste Aufnahmevorrichtung oder die zweite Aufnahmevorrichtung einen kleineren Abstand zur Wandfläche auf. Jene Aufnahmevorrichtung, welche weiter von der Wand weg angeordnet und in einem Endbereich der Klemmvorrichtung befindlich ist, kann dabei so ausgebildet sein, dass die Stange entlang der Längsachse der Verbindungshülse an die Klemmvorrichtung herangeführt und in die entsprechende Aufnahmevorrichtung aufgenommen wird.

Bei der zweiten Aufnahmevorrichtung kann das Aufnehmen der Stange durch ein Heranführen der Stange zur Klemmvorrichtung senkrecht zur Längsachse der Verbindungshülse geschehen. Vorzugsweise ist die erste Aufnahmevorrichtung einstückig mit der zweiten Aufnahmevorrichtung ausgebildet.

Die erste Aufnahmevorrichtung und/oder die zweite Aufnahmevorrichtung sind bevorzugterweise halbrohrförmig ausgebildet. Zur Aufnahme der Stange liegen die erste und/oder die zweite Aufnahmevorrichtung an der Innenwand der Aufnahmevorrichtung an.

Die erste Aufnahmevorrichtung und/oder die zweite Aufnahmevorrichtung kann beispielsweise ein Halbrohr sein, also ein Abschnitt von 180° eines vollen Rohres, oder ein Abschnitt von kleiner als 180° eines vollen Rohres sein, entlang der Umfangsrichtung des vollen Rohres betrachtet.

Durch die halbrohrförmige Ausgestaltung der ersten und/oder der zweiten Aufnahmevorrichtung wird die Stange besonders stabil in der ersten und/oder zweiten Aufnahmevorrichtung gehalten, da die Aufnahmevorrichtungen jeweils eine große Auflagefläche für die Stange insbesondere in einer Axialrichtung der Stange bereitstellen.

Neben der ersten Aufnahmevorrichtung und der zweiten Aufnahmevorrichtung können noch weitere Aufnahmevorrichtungen vorgesehen sein. Dabei sind alle Aufnahmevorrichtungen beabstandet zueinander ausgebildet. Dadurch wird die Flexibilität der Klemmvorrichtung weiter erhöht, da sie für unterschiedliche Abstände zwischen Stange und Wand einsetzbar ist. Dadurch ist es insbesondere nicht notwendig, die Stange umzupositionieren, um einen passenden Abstand zum Anordnen der Klemmvorrichtung zwischen der Stange und der Wand einzustellen.

Gemäß einer weiteren zweckmäßigen Ausgestaltung weist die Klemmvorrichtung eine Befestigungsvorrichtung auf, mittels welcher die Stange in der zweiten Aufnahmevorrichtung und/oder in der ersten Aufnahmevorrichtung fixiert wird. Insbesondere, wenn die Aufnahmevorrichtung derart ausgestaltet ist, dass die Stange während der Installation senkrecht zur Längsachse der Verbindungshülse an die Klemmvorrichtung geführt wird und die Auflagefläche der Stange im Wesentlichen senkrecht zur Klemmrichtung angeordnet ist, kann die Stange mittels der Befestigungsvorrichtung sicher an der Aufnahmevorrichtung fixiert werden.

Gemäß einer weiteren vorteilhaften Ausgestaltung ist vorgesehen, dass die Befestigungsvorrichtung zur Fixierung der Stange in der zweiten Aufnahmevorrichtung und/oder der ersten Aufnahmevorrichtung mittels des Spannelementes mit einer Spannung beaufschlagt wird.

Dadurch, dass die Verbindungsvorrichtung und die erste und die zweite Aufnahmevorrichtung durch dasselbe Spannelement mit einer Spannung beaufschlagt werden können, ergeben sich eine Reihe von Vorteilen. So werden für die Herstellung der Klemmvorrichtung weniger Bauteile benötigt, Montageschritte gespart und somit die Kosten reduziert. Darüber hinaus reduziert sich auf vorteilhafte Weise das Gewicht der Klemmvorrichtung.

Ferner weist die Befestigungsvorrichtung vorzugsweise eine Haltenase auf, welche die Stange im montierten Zustand der Klemmvorrichtung zumindest teilweise umschließt. Diese Haltenase ist vorzugsweise an einem Hebel zur Betätigung der Befestigungsvorrichtung angeordnet. Mittels des Hebels, welcher kraftschlüssig mit dem Spannelement in Verbindung steht, kann die Befestigungsvorrichtung mit einer Spannung beaufschlagt werden, wodurch die Haltenase derart von der Aufnahmevorrichtung wegbewegt wird, dass die Stange zur Deinstallation der Klemmvorrichtung aus der Aufnahmevorrichtung entnommen werden kann oder zur Installation der Klemmvorrichtung in die Aufnahmevorrichtung geführt werden kann.

Die Haltenase und der Hebel sind vorzugsweise einstückig ausgebildet und um dieselbe Rotationsachse zum Lösen und Schließen der Befestigungsvorrichtung rotierbar beziehungsweise schwenkbar. Die Befestigungsvorrichtung ist vorzugsweise mittels einer Schraube und einer Mutter an der ersten Aufnahmevorrichtung und/oder an der zweiten Aufnahmevorrichtung befestigt.

Die Beaufschlagung der Befestigungsvorrichtung mit einer Spannung durch das Spannelement erfolgt vorzugsweise über einen Zapfen, welcher die Befestigungsvorrichtung in einer Richtung parallel zur Längsachse der Verbindungshülse kraftschlüssig mit dem Spannelement verbindet. Der Zapfen erstreckt sich durch die Verbindungshülse und die Hülse an der Aufnahmevorrichtung und ist dort entlang der Längsrichtung der Verbindungshülse bewegbar gelagert.

Die Klemmvorrichtung bevorzugst weist zwei Streben senkrecht zur Längsachse der Verbindungshülse auf, sowie eine Strebe parallel hierzu. Die Streben sind profilförmig ausgebildet, wobei die Streben vorzugsweise ein Doppel-T-Profil aufweisen. Mittels der Stützvorrichtung wird die Stabilität der Staubschutzwand insbesondere bei Belastungen der Stange senkrecht zur ihrer Längsachse vorteilhaft erhöht.

Ein Verschieben der Klemmvorrichtung ist entlang der Stange durch Überwindung der Reibung zwischen der Stange, der Aufnahmevorrichtung und der Befestigungsvorrichtung möglich, sodass die Klemmvorrichtung auch im bereits montieren Zustand zwischen der Stange und der Wand parallel zur Längsachse der Stange verschoben werden kann. Dadurch kann vorteilhaft auch nach der Installation der Klemmvorrichtung die optimale Position der Klemmschiene zur Fixierung der Folie gewähltwerden.

Vorzugsweise ist darüber hinaus ein zweiter Vorsprung vorgesehen, wobei sowohl der erste als auch der zweite Vorsprung eine längliche Form aufweisen.

Vorzugsweise ist wenigstens einer der beiden Vorsprünge elastisch, insbesondere biegbar ausgebildet, um das Verbindungsteil an das Profil klemmen zu können und den Vorsprung mit dem Profil der Klemmschiene in Eingriff zu bringen. Diese Art der Befestigung bietet eine Reihe von Vorteilen, da so das Verbindungsteil einfach an der Klemmschiene montiert werden kann und kein Werkzeug benötigt wird. Darüber hinaus ist die Klemmvorrichtung entlang des Profils der Klemmschiene verfahrbar beziehungsweise verschiebbar, um so die Klemmvorrichtung auch nachträglich bezüglich der Höhe justieren zu können.

Erfindungsgemäß ist vorgesehen, dass das Verbindungsteil einstückig ausgeführt ist, umfassend die Verbindungshülse, die Stützvorrichtung und den wenigstens einen Vorsprung. Dadurch reduziert sich die Anzahl der Einzelbauteile, was sich insbesondere vorteilhaft auf die Montage der Klemmvorrichtung auswirkt.

Des Weiteren betrifft die Erfindung eine Staubschutzwand, welche mindestens eine Folie sowie mindestens eine Stange aufweist. Die mindestens eine Stange weist ein erstes Ende und ein zweites Ende auf, wobei die Folie jeweils zwischen dem ersten Ende und einer zweiten Wandfläche oder Deckenfläche und/oder zwischen dem zweiten Ende und einer dritten Wandfläche oder Deckenfläche klemmbar ist oder geklemmt ist.

Ferner weist die Staubschutzwand zumindest eine Klemmschiene auf, wobei die Folie zwischen der Klemmschiene und einer ersten Wandfläche oder Deckenfläche klemmbar ist oder geklemmt ist. Zum Fixieren der Klemmschiene zwischen der ersten Wandfläche oder Deckenfläche und der mindestens einen Stange ist eine Klemmvorrichtung mit den zuvor beschriebenen Merkmalen vorgesehen.

Vorteilhaft wird die Staubschutzwand aus mehreren Stangen gebildet, welche zwischen den abzutrennenden Raumbereichen aufgestellt werden, wobei die Abstände zwischen den jeweils äußeren Stangen und den benachbarten Wandflächen mittels der Klemmvorrichtung ausgeglichen und abgeschlossen werden.

Zum Ausgleichen der Abstände zwischen den jeweils äußeren Stangen und der jeweiligen Wandfläche können eine oder mehrere Klemmvorrichtungen und eine oder mehrere Klemmschienen vorgesehen sein.

### Kurze Beschreibung der Zeichnungen

Ausführungsbeispiele der Erfindung werden nachstehend anhand der Zeichnungen näher erläutert. Es zeigen:
- Fig. 1: eine Draufsicht auf die Klemmvorrichtung,
- Fig. 2: eine perspektivische Ansicht der Klemmvorrichtung, und
- Fig. 3: eine perspektivische Ansicht der Klemmvorrichtung mit der Klemmschiene und der Stange zur Ausbildung einer mobilen Staubschutzwand.

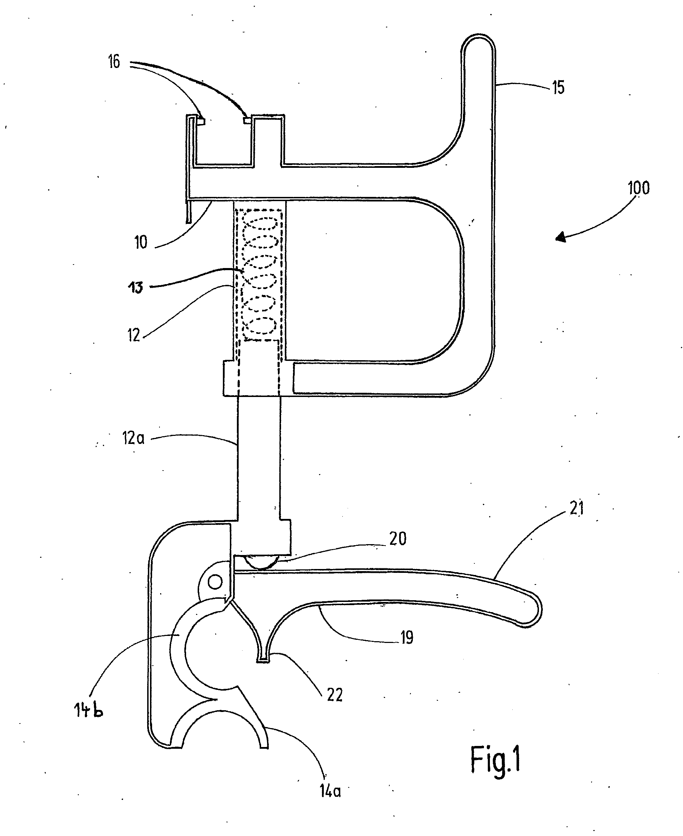

Figur 1 zeigt die Klemmvorrichtung 100 mit dem Verbindungsteil 10, welches zur Befestigung an einer nicht dargestellten Klemmschiene 210 ausgebildet ist. Zur Verbindung mit der Klemmschiene 210 weist das Verbindungsteil 10 zwei Vorsprünge 16 auf, welche in das Profil der Klemmschiene einklemmbar sind.

Ferner umfasst die Klemmvorrichtung 100 eine Verbindungshülse 12, innerhalb derer ein Spannelement 13 angeordnet ist. Das Verbindungsteil 10 ist in Figur 1 transparent dargestellt. Das Verbindungsteil 10 umfasst weiterhin eine Stützvorrichtung 15, welche einstückig mit der Verbindungshülse 12 ausgebildet ist. Die Stützvorrichtung 15 umfasst zwei Streben, welche sich senkrecht von der Verbindungshülse 12 erstrecken. An den der Verbindungshülse 12 abgewandten Enden der Streben werden die beiden Streben durch eine parallel zur Verbindungshülse 12 laufende dritte Strebe verbunden. Die dritte Strebe liegt im installierten Zustand der Klemmvorrichtung 100 an der ersten Wandfläche oder Deckenfläche auf. Die Streben der Stützvorrichtung 15 weisen die Form eines Doppel-T-Profils auf.

Abschnittsweise innerhalb der Verbindungshülse 12 erstreckt sich die Hülse 12a, welche ein Bauteil mit der ersten Aufnahmevorrichtung 14a und der zweiten Aufnahmevorrichtung 14b bildet. Die Hülse 12a ist bewegbar in der Verbindungshülse 12 gelagert, wobei während der Bewegung der Hülse 12a in Richtung des Befestigungspunktes des Verbindungsteils 10 mit der Klemmschiene 210 das Spannelement 13 mit einer Spannung beaufschlagt wird.

Die Klemmvorrichtung 100 weist eine zweite Aufnahmevorrichtung 14b auf, wobei die beiden Aufnahmevorrichtungen 14a, 14b in einer Linie mit der zweiten Hülse 12a und der Verbindungshülse 12 angeordnet sind. An der Aufnahmevorrichtung, in dem dargestellten Beispiel der ersten Aufnahmevorrichtung 14a, die einen geringeren Abstand zur Verbindungshülse 12 aufweist, ist eine Befestigungsvorrichtung 19 angeordnet.

Die Befestigungsvorrichtung 19 umfasst einen Hebel 21 und eine Haltenase 22. Die Haltenase 22 dient zur Fixierung der nicht dargestellten Stange 211, welche in der ersten Aufnahmevorrichtung 14a aufgenommen ist. Mittels des Hebels 21 kann die Haltnase 22 bewegt werden, wobei die Befestigungsvorrichtung 19 während dieser Bewegung mittels des Spannelements 13 mit einer Spannung beaufschlagt wird. Dazu ist die Befestigungsvorrichtung 19 über eine Zapfen 20 mit dem Spannelement 13 kraftschlüssig entlang der Längsrichtung der Verbindungshülse 12 bzw. der Hülse 12a verbunden.

Die Bewegung der Befestigungsvorrichtung 19 erfolgt in Form einer Rotation beziehungsweise in Form eines Schwenkens um den Befestigungspunkt der Befestigungsvorrichtung 19 an der ersten bzw. zweiten Aufnahmevorrichtung 14a, 14b, wobei die Befestigungsvorrichtung 19 mittels einer Schraube und einer Mutter an der ersten bzw. zweiten Aufnahmevorrichtung 14a, 14b rotierbar befestigt ist.

Auch im installierten Zustand der Klemmvorrichtung 100 ist die Befestigungsvorrichtung 19 mit einer Spannung mittels des Spannelements 13 beaufschlagt, sodass die die nicht dargestellte Stange 211 in der halbrohrförmigen ersten Aufnahmevorrichtung 14a oder in der zweiten Aufnahmevorrichtung 14b gehalten wird.

Die zweite Aufnahmevorrichtung 14b ist an dem dem Befestigungspunkt der Klemmvorrichtung 100 mit der Klemmschiene 210 gegenüber liegenden Ende der Klemmvorrichtung 100 angeordnet und ist ebenfalls halbrohrförmig ausgebildet. Diese zweite Aufnahmevorrichtung 14b umfasst in dem gezeigten Beispiel keine Befestigungsvorrichtung, da die Stange 211 durch die Klemmkraft zwischen der Stange 211 und der ersten Wandfläche oder Deckenfläche in der zweiten Aufnahmevorrichtung 14b gehalten wird.

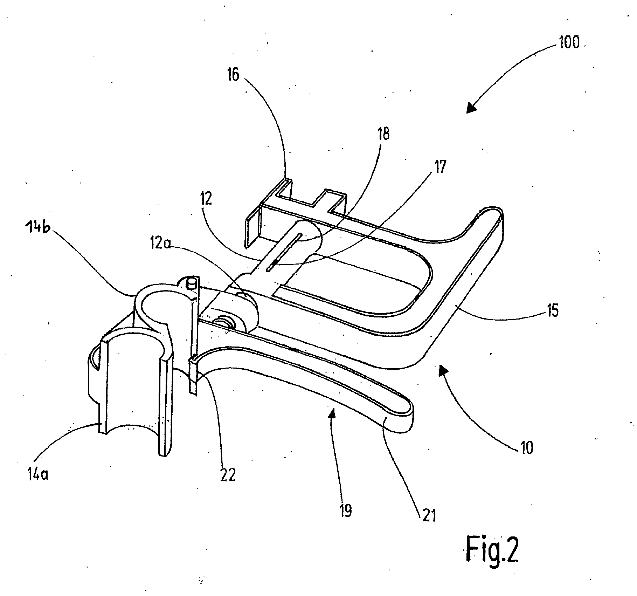

Figur 2 zeigt die Klemmvorrichtung 100 in einer perspektivischen Ansicht. In dieser Figur ist die Führungsnut 18 an der Verbindungshülse 12 zu erkennen, in welcher das Führungselement 17 beweglich beziehungsweise verschiebbar angeordnet ist. Das Führungselement 17 ist an der Hülse 12a befestigt und hält beziehungsweise führt diese innerhalb der Verbindunghülse 12 und sorgt darüber hinaus dafür, dass die Hülse 12a und die damit verbundenen Aufnahmevorrichtungen 14a, 14b nicht gegen die Verbindungshülse 12 verdreht werden können.

Ferner zeigt die Figur 2 die Ausgestaltung der ersten Aufnahmevorrichtung 14a und der zweiten Aufnahmevorrichtung 14b. Es ist zu erkennen, dass die beiden Aufnahmevorrichtungen 14a, 14b jeweils mit halbkreisförmigem Querschnitt ausgebildet sind, sodass eine optimale Auflagefläche für die Aufnahme der Stange 210 geschaffen ist. Jede Aufnahmevorrichtung 14a, 14b weist eine Länge auf, welche mindestens doppelt so groß ist, wie der Durchmesser der Verbindungshülse 12.

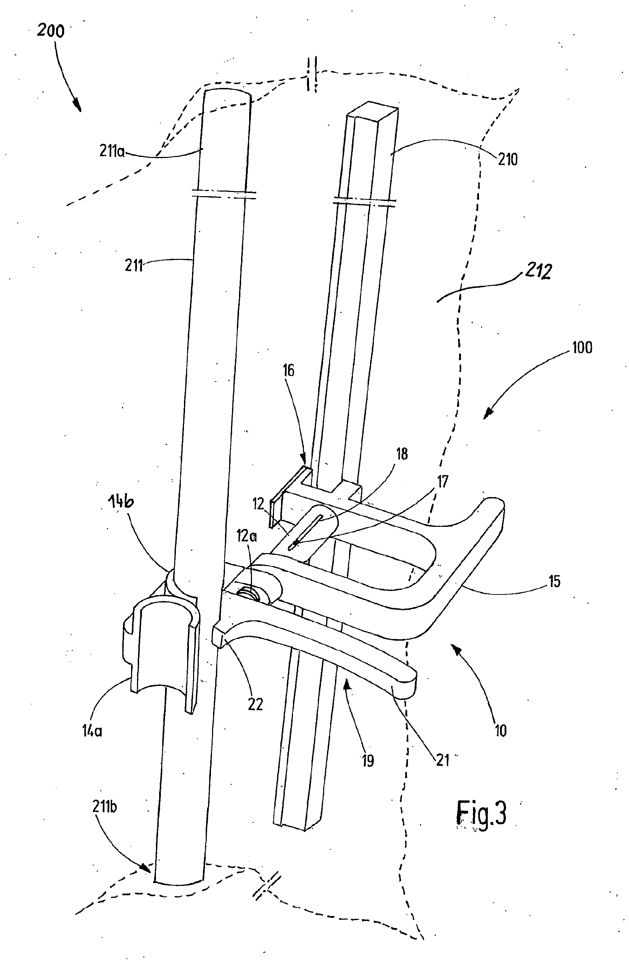

In Figur 3 ist eine mobile Staubschutzwand 200 zumindest teilweise dargestellt, wobei an der Klemmvorrichtung 100 die Klemmschiene 210 befestigt ist und die Stange 210 in der ersten Aufnahmevorrichtung 14a aufgenommen und mit der Befestigungsvorrichtung 19 darin fixiert ist.

Die Stange 211 weist ein erstes Ende 211a und ein zweites Ende 211b auf, wobei zwischen dem ersten Ende 211a und einer Deckenfläche, dem zweiten Ende 211b und einer Bodenfläche, sowie der Klemmschiene 210 und einer Wandfläche eine Folie 212 einklemmbar ist.

### Bezugszeichenliste

- 100: Klemmvorrichtung
- 200: Staubschutzwand

- 10: Verbindungsteil
- 12: Verbindungshülse
- 12a: Hülse
- 13: Spannelement
- 14a: ersteAufnahmevorrichtung
- 14b: zweiteAufnahmevorrichtung
- 15: Stützvorrichtung
- 16: Vorsprung
- 17: Führungselement
- 18: Führungsnut
- 19: Befestigungsvorrichtung
- 20: Zapfen
- 21: Hebel
- 22: Haltenase

- 210: Klemmschiene
- 211: Stange
- 211a: erstes Ende der Stange
- 211b: zweites Ende der Stange
- 212: Folie

## Patentansprüche

1. Klemmvorrichtung (100) zum Fixieren einer Klemmschiene (210) zwischen einer ersten Wandfläche oder einer Deckenfläche und einer parallel zu der ersten Wandfläche oder der Deckenfläche angeordneten Stange (211), aufweisend ein Verbindungsteil (10), welches zur Befestigung der Klemmvorrichtung (100) mit der Klemmschiene (210) ausgebildet ist, und aufweisend mindestens eine erste Aufnahmevorrichtung (14a) zur Aufnahme der Stange (211),
wobei
das Verbindungsteil (10) eine zwischen der Klemmschiene (210) und der Stange (211) anordnenbare Verbindungshülse (12) aufweist, innerhalb derer axial ein Spannelement (13) angeordnet ist, wobei mittels des Spannelements (13) die erste Aufnahmevorrichtung (14a) mit einer Spannung gegenüber dem Verbindungsteil (10) beaufschlagbar ist, wobei das Verbindungsteil (10) eine Stützvorrichtung (15) aufweist, mittels welcher die Klemmvorrichtung (100) in einer Richtung senkrecht zu einer Längsachse der Verbindungshülse (12) an der ersten Wandfläche oder Deckenfläche abgestützt werden kann, wobei zur Befestigung der Klemmvorrichtung (100) mit der Klemmschiene (210) das Verbindungsteil (10) wenigstens einen Vorsprung (16) aufweist, welcher zum Eingriff in ein Profil der Klemmschiene (210) ausgebildet ist **dadurch gekennzeichnet, dass** das Verbindungsteil (10) einstückig ausgeführt ist, umfassend die Verbindungshülse (12), die Stützvorrichtung (15) und den wenigstens einen Vorsprung (16).

2. Klemmvorrichtung (100) nach Anspruch 1, **dadurch gekennzeichnet, dass** die Verbindungshülse (12) eine Führungsnut (18) aufweist, wobei an der ersten Aufnahmevorrichtung (14a) eine Hülse (12a) angeordnet ist, wobei die Hülse innerhalb der Verbindungshülse (12) angeordnet ist, wobei die Hülse (12a) ein Führungselement (17) aufweist, welches innerhalb der Führungsnut (18) angeordnet ist, sodass die Hülse (12a) innerhalb der Verbindungshülse (12) in Längsrichtung der Führungsnut (18) bewegbar ist und geführt wird.

3. Klemmvorrichtung (100) nach einem der vorgenannten Ansprüche, **dadurch gekennzeichnet, dass** das Spannelement (13) eine Feder ist.

4. Klemmvorrichtung (100) nach einem der vorgenannten Ansprüche, **dadurch gekennzeichnet, dass**, die Klemmvorrichtung (100) eine zweite Aufnahmevorrichtung (14b) zur Aufnahme der Stange (211) aufweist, welche entlang einer Längsachse der Verbindungshülse (12) um einen festen Abstand versetzt zur ersten Aufnahmevorrichtung (14a) angeordnet ist.

5. Klemmvorrichtung (100) nach Anspruch 4, **dadurch gekennzeichnet, dass** die zweite Aufnahmevorrichtung (14b) mittels des Spannelements (13) gegenüber dem Verbindungsteil (10) mit einer Spannung beaufschlagbar ist.

6. Klemmvorrichtung (100) nach einem der vorgenannten Ansprüche, **dadurch gekennzeichnet, dass** die Klemmvorrichtung (100) eine Befestigungsvorrichtung (19) aufweist, mittels welcher die Stange (211) in der ersten Aufnahmevorrichtung (14b) und/oder, wenn zumindest abhängig von einem der Ansprüche 4 oder 5, in der zweiten Aufnahmevorrichtung (14a) fixiert wird.

7. Klemmvorrichtung (100) nach Anspruch 6, **dadurch gekennzeichnet, dass** die Befestigungsvorrichtung (19) zur Fixierung der Stange in der zweiten Aufnahmevorrichtung (14b) und/oder der ersten Aufnahmevorrichtung (14a) mittels des Spannelements (13) mit einer Spannung beaufschlagt wird.

8. Staubschutzwand (200), aufweisend mindestens eine Folie (212), aufweisend mindestens eine Klemmschiene (210), wobei die Folie (212) zwischen der Klemmschiene (210) und einer ersten Wandfläche oder Deckenfläche klemmbar ist oder geklemmt ist, aufweisend mindestens eine Stange (211), mit einem ersten Ende (211a) und einem zweiten Ende (211b), wobei die Folie (212) jeweils zwischen dem ersten Ende (211a) und einer zweiten Wandfläche oder Deckenfläche und/oder zwischen dem zweiten Ende (211b) und einer dritten Wandfläche oder Deckenfläche klemmbar ist oder geklemmt ist,
**dadurch gekennzeichnet, dass**
zum Fixieren der Klemmschiene (210) zwischen der ersten Wandfläche oder Deckenfläche und zur Aufnahme der mindestens einen Stange (211) eine Klemmvorrichtung (100) nach einem der vorgenannten Ansprüche vorgesehen ist.

## Claims

1. Clamping device (100) for fixing a clamping rail (210) between a first wall surface or a ceiling surface and a rod (211) arranged parallel to the first wall surface or the ceiling surface, having a connecting part (10) which is configured to fasten the clamping device (100) with the clamping rail (210), and having at least one first receiving device (14a) for receiving the rod (211), wherein the connecting part (10) has a connecting sleeve (12) arrangeable between the clamping rail (210) and the rod (211), within which a tensioning element (13) is arranged axially, wherein by means of the tensioning element (13) a tension is applicable to the first receiving device (14a) with respect to the connecting part (10), wherein the connecting part (10) has a support device (15), by means of which the clamping device (100) can be supported in a direction perpendicular to a longitudinal axis of the connecting sleeve (12) on the first wall surface or ceiling surface, wherein for fastening the clamping device (100) with the clamping rail (210), the connecting part (10) has at least one protrusion (16) which is configured to engage in a profile of the clamping rail (210), **characterized in that** the connecting part (10) is made in one piece, comprising the connecting sleeve (12), the support device (15) and the at least one protrusion (16).

2. Clamping device (100) according to claim 1, **characterized in that** the connecting sleeve (12) has a guide groove (18), wherein a sleeve (12a) is arranged at the first receiving device (14a), wherein the sleeve is arranged within the connecting sleeve (12), wherein the sleeve (12a) has a guide element (17) which is arranged inside the guide groove (18), so that the sleeve (12a) can be moved and is guided within the connecting sleeve (12) in the longitudinal direction of the guide groove (18).

3. Clamping device (100) according to one of the preceding claims, **characterized in that** the tensioning element (13) is a spring.

4. Clamping device (100) according to one of the preceding claims, **characterized in that** the clamping device (100) has a second receiving device (14b) for receiving the rod (211), which is arranged offset by a fixed distance to the first receiving device (14a) along a longitudinal axis of the connecting sleeve (12).

5. Clamping device (100) according to claim 4, **characterized in that** a tension can be applied to the second receiving device (14b) by means of the tensioning element (13) with respect to the connecting part (10).

6. Clamping device (100) according to one of the preceding claims, **characterized in that** the clamping device (100) has a fastening device (19), by means of which the rod (211) is fixed in the first receiving device (14a) and / or, if at least dependent on one of claims 4 or 5, in the second receiving device (14b).

7. Clamping device (100) according to claim 6, **characterized in that** a tension is applied to the fastening device (19) for fixing the rod in the second receiving device (14b) and / or the first receiving device (14a) by means of the tensioning element (13).

8. Dust protection wall (200), having at least one sheet (212), having at least one clamping rail (210), wherein the sheet (212) is clampable or clamped between the clamping rail (210) and a first wall surface or ceiling surface, having at least one rod (211), with a first end (211a) and a second end (211b), wherein the sheet (212) is clampable or clamped between the first end (211a) and a second wall surface or ceiling surface and / or between the second end (211b) and a third wall surface or ceiling surface respectively, **characterized in that** a clamping device (100) according to one of the preceding claims is provided for fixing the clamping rail (210) between the first wall surface or ceiling surface and for receiving the at least one rod (211).

## Revendications

1. Dispositif de serrage (100) pour fixer un rail de serrage (210) entre une première surface murale ou une surface de plafond et une barre (211) disposée parallèlement à la première surface murale ou la surface de plafond, comportant une pièce de liaison (10), laquelle est constituée pour fixer le dispositif de serrage (100) au rail de serrage (210) et comportant au moins un premier dispositif de logement (14a) pour loger la barre (211), sachant que
la pièce de liaison (10) comporte un manchon de raccordement (12) disposable entre le rail de serrage (210) et la barre (211), à l'intérieur duquel est disposé axialement un élément tendeur (13), sachant qu'au moyen de l'élément tendeur (13), le premier dispositif de logement (14a) peut être sollicité par une tension par rapport à la pièce de liaison (10), sachant que la pièce de liaison (10) comporte un dispositif d'appui (15) au moyen duquel le dispositif de serrage (100) peut être appuyé perpendiculairement à un axe longitudinal du manchon de raccordement (12) sur la première surface murale ou surface de plafond, sachant que pour la fixation du dispositif de serrage (100) avec le rail de serrage (210), la pièce de liaison (10) comporte au moins une saillie (16), laquelle est constituée pour venir en prise dans un profil du rail de serrage (210), **caractérisé en ce que** la pièce de liaison (10) est exécutée en une seule pièce comprenant le manchon de raccordement (12), le dispositif d'appui (15) et au moins une saillie (16).

2. Dispositif de serrage (100) selon la revendication 1, **caractérisé en ce que** le manchon de raccordement (12) comporte une rainure de guidage (18), sachant que sur le premier dispositif de logement (14a) est disposé un manchon (12a), sachant que le manchon est disposé à l'intérieur du manchon de raccordement (12), sachant que le manchon (12a) comporte un élément de guidage (17), lequel est disposé à l'intérieur de la rainure de guidage (18) de telle sorte que le manchon (12a) est mobile et guidé à l'intérieur du manchon de raccordement (12) en direction longitudinale de la rainure de guidage (18).

3. Dispositif de serrage (100) selon l'une quelconque des revendications précédentes, **caractérisé en ce que** l'élément tendeur (13) est un ressort.

4. Dispositif de serrage (100) selon l'une quelconque des revendications précédentes, **caractérisé en ce que** le dispositif de serrage (100) comporte un deuxième dispositif de logement (14b) pour loger la barre (211), lequel est disposé le long d'un axe longitudinal du manchon de raccordement (12) décalé d'un distance fixe par rapport au premier dispositif de logement (14a).

5. Dispositif de serrage (100) selon la revendication 4, **caractérisé en ce que** le deuxième dispositif de logement (14b) peut être sollicité par une tension au moyen de l'élément tendeur (13) par rapport à la pièce de liaison (10).

6. Dispositif de serrage (100) selon l'une quelconque des revendications précédentes, **caractérisé en ce que** le dispositif de serrage (100) comporte un dispositif de fixation (19), au moyen duquel la barre (211) est fixée dans le premier dispositif de logement (14a) et/ou dans le deuxième dispositif (14b), si cela est au moins fonction de l'une quelconque des revendications 4 ou 5.

7. Dispositif de serrage (100) selon la revendication 6, **caractérisé en ce que** le dispositif de fixation (19) pour fixer la barre dans le deuxième dispositif de logement (14b) et/ou le premier dispositif de logement (14a) est sollicité par une tension au moyen de l'élément tendeur (13).

8. Paroi antipoussière (200) comportant au moins une feuille (212), comportant au moins un rail de serrage (210), sachant que la feuille (212) peut être serrée ou est serrée entre le rail de serrage (210) et une première surface murale ou surface de plafond, comportant au moins une barre (211), avec une première extrémité (211a) et une deuxième extrémité (211b), sachant que la feuille (212) peut être serrée ou est serrée respectivement entre la première extrémité (211a) et une deuxième surface murale ou surface de plafond et/ou entre la deuxième extrémité (211b) et une troisième surface murale ou surface de plafond, **caractérisée en ce que**
pour fixer le rail de serrage (210) entre la première surface murale ou surface de plafond et pour loger au moins une barre (211), un dispositif de serrage (100) est prévu selon l'une quelconque des revendications précédentes.
